# EUROPÄISCHE PATENTSCHRIFT

(11) **EP 1 478 539 B1**
(45) Veröffentlichungstag und Bekanntmachung des Hinweises auf die Patenterteilung: **01.10.2008**
(21) Anmeldenummer: 03704641.4
(22) Anmeldetag: 18.02.2003
(51) Int. Cl.: B60K 15/04, B60K 13/04, B60H 1/00, B62D 25/08, B60K 11/04

(54) **MONTAGETRÄGER EINES FRONTENDS EINES KRAFTFAHRZEUGS**
ASSEMBLY SUPPORT OF A FRONT END OF A MOTOR VEHICLE
SUPPORT DE MONTAGE DE LA PARTIE AVANT D'UN VEHICULE AUTOMOBILE

(30) Priorität: 20.02.2002 DE 10207025
(43) Veröffentlichungstag der Anmeldung: 24.11.2004
(73) Patentinhaber: Behr GmbH & Co. KG, 70469 Stuttgart (DE); Hella-Behr Fahrzeugsysteme GmbH, 59552 Lippstadt (DE)
(72) Erfinder: ANDRITTER, Dirk, 74379 Ingersheim (DE); SCHMIDGALL, Stefan, 70378 Stuttgart (DE); SCHLINGMANN, Hans, 32805 Horn-Bad Meinberg (DE); SCHMIDT, Ralf, 59302 Oelde (DE); BRÜCKNER, Reinhold, 33442 Herzebrock-Clarholz (DE); KERSTING, Dirk, 59555 Lippstadt (DE); FISCHER, Andreas, 59553 Lippstadt-Esbeck (DE); GEHRING, Martin, 73650 Winterbach (DE); WINKELMANN, Horst, 71120 Grafenau (DE)
(74) Vertreter: Gleiss & Grosse
(86) Internationale Anmeldenummer: PCT/EP2003/001603
(87) Internationale Veröffentlichungsnummer: WO 2003/070503

(56) Entgegenhaltungen:
- DE-A- 2 634 990
- DE-A- 4 142 023
- DE-A- 10 051 567
- DE-C- 3 246 583
- FR-A- 2 564 899
- US-A- 5 067 574

## Beschreibung

Die Erfindung betrifft einen Montageträger eines Frontends eines Kraftfahrzeugs, mit mindestens einem am Montageträger mittels mindestens zweier Verbindungsstellen lösbar befestigten Kühlmodul, wobei eine der Verbindungsstellen als Schwenklager und die andere der Verbindungsstellen als Klipsverbindung ausgebildet ist.

Das Kühlmodul ist vorteilhafterweise schraubenfrei am Montageträger befestigt, das heißt, es werden keine zusätzlichen Befestigungsmittel, wie zum Beispiel Schrauben, benötigt, um eine sichere Anbindung des Kühlmoduls am Montageträger zu gewährleisten.

Aus der DE 198 27 451 A1 sind ein Montageträger der hier angesprochenen Art und ein Verfahren zur Montage eines Kühlers an dem Montageträger bekannt. Der Montageträger ist eine tragende Struktur eines Frontends des Kraftfahrzeugs, an dem zumindest der Kühler lösbar befestigbar ist. Hierzu sind am Kühler von einem elastischen Material umschlossene Halteteile vorgesehen, die zur Befestigung des Kühlers in Nuten am Montageträger eingesteckt werden. Die Nuten weisen jeweils einen in Richtung der Vorwärtsbewegung des Fahrzeugs verlaufenden ersten Nutabschnitt, einen sich vom hinteren Ende des ersten Nutabschnitts nach unten erstreckenden zweiten Nutabschnitt und einen sich vom unteren Ende des zweiten Nutabschnitts in Längsrichtung des Fahrzeugs erstreckenden dritten Nutabschnitt auf. Zum Befestigen des Kühlers werden die Halteteile zunächst in den ersten Nutabschnitt eingeführt und bis zum zweiten Nutabschnitt verschoben. Dabei wird die elastische Ummantelung so weit zusammengedrückt, dass die Halteteile sich nach unten bis zum dritten Nutabschnitt verschieben lassen. Durch die Gegenkräfte der verformten elastischen Ummantelung werden die Halteteile in den dritten Nutabschnitt quasi eingedrückt und darin gehalten. Der Kühler wird am Montageträger ausschließlich durch die in die Nuten eingreifenden Halteteile gehalten, das heißt, auf zusätzliche Befestigungs- oder Verbindungsmittel kann verzichtet werden. Es hat sich gezeigt, dass beim Befestigen des Kühlers relativ hohe Kräfte aufgebracht werden müssen, insbesondere um die elastische Ummantelung der Halteteile zu komprimieren. Dabei muss gleichzeitig der Kühler exakt geführt werden, damit die Halteteile in den Nuten nicht verkanten.

Ein Montageträger der eingangs genannten, gattungsbildenden Art ist aus der DE 41 42 023 bekannt. Er dient zum Halten eines Wärmetauschers mittels Schnapp- beziehungsweise Rastverbindungen und Schwenklagerverbindungen, sodass eine werkzeugfreie Montage vorgenommen werden kann. Im normalen Betrieb wird der Wärmetauscher durch die genannten Verbindungen sicher gehalten. Treten jedoch betriebsfremde Belastungen, beispielsweise bei einem Auffahrunfall des Fahrzeugs, auf, so gibt die genannte Literaturstelle keine Hinweise auf Maßnahmen zum Schutze des Wärmetauschers.

Der Erfindung liegt daher die Aufgabe zugrunde, einen Montageträger für ein Kühlmodul der eingangs genannten Art zu schaffen, das sowohl bei betriebsüblichen als auch bei betriebsfremden Belastungen vor Beschädigungen weitestgehend sicher ist.

Zur Lösung der Aufgabe wird ein Montageträger mit den Merkmalen des Anspruchs 1 vorgeschlagen.

Wirken Kräfte auf das Kühlmodul, die höher als die betriebsüblichen Kräfte sind, zum Beispiel bei einem Frontalzusammenstoß im "low-speed"-Bereich, so werden die Lagerzapfen entgegen der Fahrtrichtung aus den Lagerschalen aufgrund von auf die Bauteile wirkenden Verformungskräften und/oder durch Beschleunigungskräfte herausgedrückt. Dabei werden die Lagerzapfen so weit gegen die Fahrtrichtung verschoben, bis sie an dem jeweils zugehörigen Wegbegrenzungsanschlag anschlagen, also von diesem aufgefangen werden. Damit ist für den Fall eines Zusammenstoßes des Fahrzeugs ein definierter Verschiebeweg des Lagerzapfens und damit ein Schutz gewährleistet.

Zum Befestigen des Kühlmoduls am Montageträger muss das Kühlmodul lediglich im Schwenklager in eine Endstellung verschwenkt werden, in der das Kühlmodul mit dem Montageträger verklipst ist. Ein Befestigen des Kühlmoduls am Montageträger ist also schnell und in einfacher Weise ohne Zuhilfenahme, von, Werkzeugen möglich.

Vorteilhafte Ausführungsformen des Montageträgers ergeben sich aus den in den Unteransprüchen genannten Merkmalen.

Die Erfindung wird im Folgenden anhand der Zeichnung näher erläutert. Es zeigen:
- Figur 1: eine Prinzipskizze eines Ausführungsbeispiels eines Kühlmoduls;
- Figur 2: eine perspektivische Darstellung eines am Kühlmodul gemäß Figur 1 vorgesehenen Lagerzapfens;
- Figuren 3A und 3B: jeweils einen nicht die Erfindung zeigenden Ausschnitt eines Montageträgers und eines daran befestigten Kühlmoduls;
- Figuren 4A bis 4C: jeweils eine nicht die Erfindung zeigende Ansicht eines Kühlmoduls in verschiedenen Stellungen während des Befestigungsvorgangs am Montageträger; und
- Figuren 5A bis 5C: jeweils eine Ansicht einer Verbindungsstelle zwischen Montageträger und Kühlmodul, wobei das Kühlmodul in verschiedenen Stellungen abgebildet ist.

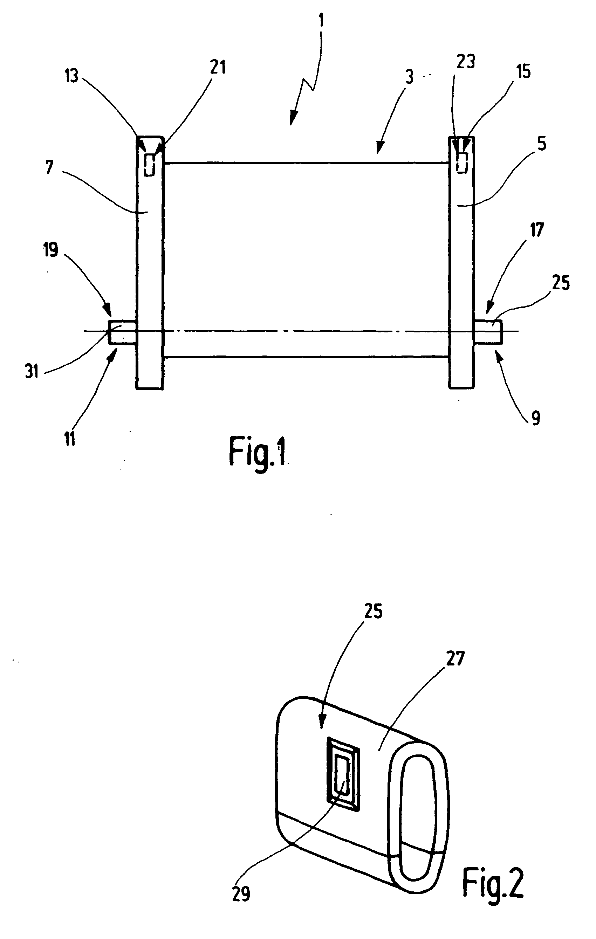

Figur 1 zeigt in schematischer Darstellung ein Ausführungsbeispiel eines Kühlmoduls 1, das an einem nicht dargestellten Montageträger eines Frontends eines Kraftfahrzeugs lösbar befestigbar ist. Das Kühlmodul 1 weist einen Kühler 3 auf, der in einem Abstand voneinander angeordnete, parallel zueinander verlaufende Seitenkästen 5 und 7, insbesondere Wasserkästen, umfasst. Diese sind über nicht dargestellte Rohre, die von dem zu kühlenden Medium durchflossen werden, miteinander verbunden. Der Kühler 3 weist ferner mindestens einen Kühlmittelzulauf und -ablauf zum Anschluss an einen Kühlmittelkreislauf auf, die in Figur 1 nicht dargestellt sind. Der Aufbau und die Funktion des Kühlers 3 ist allgemein bekannt, so dass hier nicht näher darauf eingegangen wird. Das Kühlmodul 1 kann alternativ oder zusätzlich zu dem Kühler 3 auch noch wenigstens einen weiteren Kühler und/oder Kondensator oder dergleichen aufweisen, die nebeneinander, übereinander und/oder hintereinander angeordnet sein können.

Das in Figur 1 dargestellte Kühlmodul 1 ist mittels vier Verbindungsstellen 9, 11, 13 und 15 an dem Montageträger lösbar befestigbar, von dem die ersten und zweiten Verbindungsstellen 9, 11 als Schwenklager 17, 19 und die dritten und vierten Verbindungsstellen 13, 15 als Klipsverbindungen 21, 23 ausgebildet sind. Das Schwenklager 17 und die Klipsverbindung 23 beziehungsweise Teile von diesen sind an dem Seitenkasten 5 und das Schwenklager 19 und die Klipsverbindung 21 beziehungsweise Teile von diesen an dem anderen Wasserkasten 7 vorgesehen.

Das Schwenklager 17 umfasst einen Lagerzapfen 25, der in Figur 2 in vergrößertem Maßstab dargestellt ist. Der Lagerzapfen 25 ist rohrförmig ausgebildet und weist einen ovalen Querschnitt auf. Er besitzt auf seiner Außenumfangsfläche 27 einen Vorsprung 29, der hier im Wesentlichen die Form eines Pyramidenstumpfes aufweist. Zur Funktion des Vorsprungs 29 wird nachfolgend noch näher eingegangen.

Wie aus Figur 1 ersichtlich, umfasst das andere Schwenklager 19 ebenfalls einen Lagerzapfen 31, der sich von dem anhand der Figur 2 beschriebenen Lagerzapfen 25 lediglich dadurch unterscheidet, dass er keinen Vorsprung auf seiner Außenumfangsfläche besitzt. Ferner ist der Figur 1 zu entnehmen, dass die Lagerzapfen 25, 31 fluchtend zueinander angeordnet sind, das heißt, deren Längsmittelachsen beziehungsweise deren Schwenkachsen befinden sich in fluchtender Anordnung zueinander. Die Anordnung der Lagerzapfen 25, 31 muss nicht zwingend auf gleicher Höhe sein, das heißt, sie können sich über die Höhe des Kühlmoduls 1 gesehen auch in einem Abstand voneinander befinden. Wichtig ist, dass deren Schwenkachsen parallel zueinander verlaufen.

Die Lagerzapfen 25, 31 bestehen vorzugsweise aus Kunststoff beziehungsweise sind zumindest kunststoffummantelt und einstückig mit dem jeweiligen Seitenkasten 5, 7 verbunden. In bevorzugter Ausführungsform ist vorgesehen, dass die Lagerzapfen 25, 31 an die ebenfalls aus Kunststoff bestehenden beziehungsweise Kunststoff aufweisenden Seitenkästen 5, 7 angespritzt sind.

Figur 1 zeigt, dass die Lagerzapfen 25, 31 seitlich von den Seitenrandbereichen des Kühlers 3 beziehungsweise der Seitenkästen 5, 7 hervorstehen, während die Klipsverbindungen 21, 23 auf der dem Montageträger zugewandten Seite der Seitenkästen 5, 7 angeordnet sind. Festzuhalten bleibt noch, dass im befestigten Zustand des Kühlmoduls 1 am Montageträger sich die Klipsverbindungen 21, 23 -in Richtung der Schwerkraftwirkung gesehen- oberhalb der Schwenklager 17, 19 befinden. Die Ansicht gemäß Figur 1 zeigt also eine mögliche Befestigungsposition des Kühlmoduls 1 an dem Montageträger.

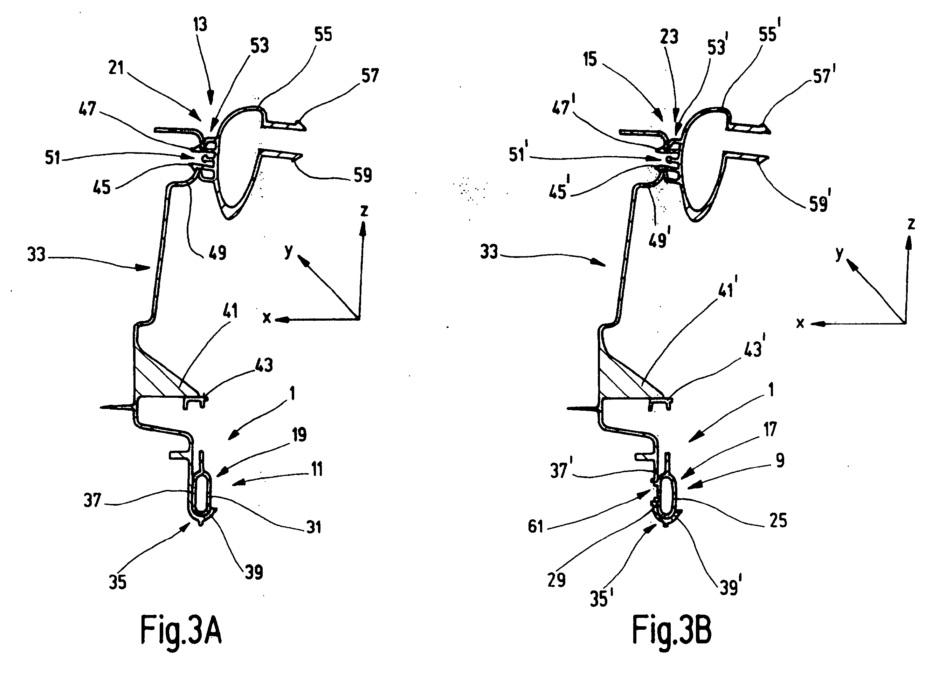

Figur 3A zeigt einen Ausschnitt eines Montageträgers 33 eines Frontends eines Kraftfahrzeugs, an dem ein Kühlmodul 1, wie es anhand der Figuren 1 und 2 beschrieben wurde, lösbar befestigt ist. Von dem Kühlmodul 1 ist ebenfalls nur ein Ausschnitt zu erkennen, und zwar im Bereich der zweiten Verbindungsstelle 11. Die in Figur 3A dargestellte Schnittansicht verläuft also durch einen Seitenrandbereich des Kühlmoduls 1 im Bereich des Seitenkastens 7 und des Schwenklagers 19.

Das Schwenklager 19 umfasst eine Lagerschale 35, die einstückig mit dem Montageträger 33 verbunden ist. Der Montageträger 33 ist vorzugsweise in Hybridbauweise ausgebildet und besteht aus mindestens zwei Materialien, vorzugsweise aus einem kunststoffummantelten Blech- beziehungsweise Metallkern. Die Lagerschale 35 besteht vorzugsweise aus Kunststoff und ist an den Montageträger 33 angespritzt. Die Lagerschale 35 setzt sich aus einem vertikal verlaufenden geraden Wandabschnitt 37 und einem sich an dessen Ende anschließenden gebogenen, nach oben hin offenen zweiten Wandabschnitt 39 zusammen. Der zweite Wandabschnitt 39 weist eine an die Außenkontur des Lagerzapfens 31 angepasste Krümmung auf, so dass bei am Montageträger 33 montierten Kühlmodul 1, wie in Figur 3A dargestellt, der ovale Lagerzapfen 31 im Bereich des zweiten Wandabschnitts 39 der Lagerschale 35 flächig anliegt. Ferner liegt der dem ersten Wandabschnitt 37 zugewandte ebene Wandbereich des Lagerzapfens 31 flächig an dem ersten Wandabschnitt 37 an. Es wird ohne weiteres deutlich, dass der zweite Wandabschnitt 39 den unteren Randbereich des Lagerzapfens 31 umgreift, so dass der Lagerzapfen 31 sicher in der Lagerschale 35 gehalten ist. Dadurch, dass die Lagerschale 35 nicht vollständig geschlossen, sondern nach oben hin geöffnet ist, kann das Kühlmodul 1 in das Schwenklager 19 mittels einer translatorischen Bewegung, die senkrecht oder in senkrechter Richtung zur senkrecht zur Bildebene der Figur 3A verlaufenden Schwenkachse des Schwenklagers 19 in dieses eingeführt werden.

Das anhand der Figur 3A beschriebene Schwenklager 19 ist als Loslager ausgebildet, das heißt, es ermöglicht einen Toleranz- und Längenausgleich des Kühlmoduls 1 in Richtung seiner Schwenkachse, also in Richtung der Koordinatenachse y, während der Formschluss zwischen Lagerschale 35 und Lagerzapfen 31 eine Bewegung des Kühlmoduls 1 in Richtung der Koordinatenachse x verhindert. Aufgrund der vorstehend beschriebenen Ausgestaltung des Schwenklagers 19 können thermisch bedingte Ausdehnungen und Fertigungstoleranzen des Kühlmoduls 1 ohne weiteres aufgenommen werden.

Um das Kühlmodul 1 im am Montageträger 33 befestigten Zustand gegen eine Verlagerung in Richtung der Koordinatenachse z, also in der Darstellung gemäß Figur 3A in vertikaler Richtung zu verhindern, ist am Montageträger 33 ein Radialbewegungsbegrenzungsanschlag 41 vorgesehen, der an den Montageträger 33 angespritzt, also einstückig mit diesem verbunden ist. Am Kühlmodul 1 ist eine Gegenfläche 43 vorgesehen, die in der in Figur 3A gezeigten Endstellung beziehungsweise Montageposition des Kühlmoduls 1 in Gegenüberlage mit dem Radialbewegungsbegrenzungsanschlag 41 gebracht ist. Durch den Anschlag 41 wird ferner sichergestellt, dass praktisch keine Kräfte in Richtung der Koordinatenachse z auf die Klipsverbindungen 21, 23 wirken, außer gegebenenfalls den durch thermisch bedingte Ausdehnungen des Kühlmoduls 1 hervorgerufenen Kräften.

Die oberhalb des Schwenklagers 19 angeordnete Klipsverbindung 21 weist selbsttätig federnd auslenkbare Halteelemente 45 und 47 auf, die -wie in Figur 3A gezeigt- in Befestigungsstellung einen Hintergriff zu einem Gegenelement 49 einnehmen, das hier am Montageträger 33 vorgesehen ist. Die Halteelemente 45, 47 greifen in ein am Montageträger 33 vorgesehenes Loch 51 ein und liegen jeweils mit einem nasenförmigen Hintergriffsabschnitt an einen Bereich des Randes des Loches 51 an, wodurch der Hintergriff gebildet und das Kühlmodul 1 sicher am Montageträger 33 fixiert ist.

Die Klipsverbindung 21 weist ferner eine Auslenkbegrenzung 53 auf, die eine unzulässige Überdehnung der Halteelemente 45, 47 verhindern soll. Die Auslenkbegrenzung 53 ist hier von drei Stegen gebildet, von denen ein erster Steg sich in dem Zwischenraum zwischen den Halteelementen 45, 47 befindet und die beiden anderen Stege auf der dem ersten Steg gegenüberliegenden Seite der Halteelemente 45, 47.

Die Halteelemente 45, 47 und die Auslenkbegrenzung 53 befinden sich an einem Klipsträger 55, der weitere selbsttätig federnd auslenkbare Halteelemente 57 und 59 aufweist, die Teile einer weiteren Klipsverbindung sind, um den Klipsträger 55 mit dem Kühlmodul 1 zu verklipsen. Der Klipsträger 55 besteht vorzugsweise aus Kunststoff und wird vorzugsweise in einem Spritzgießverfahren hergestellt.

Die anhand der Figur 3A beschriebene Klipsverbindung 21 kann ohne weiteres auch derart ausgebildet sein, dass die Halteelemente 45, 47 einstückig mit dem Kühlmodul 1, vorzugsweise mit dem Wasserkasten 7 verbunden sind. Dadurch kann auf den Klipsträger 55 als separates Teil verzichtet werden. Der Klipsträger 55 weist demgegenüber den Vorteil auf, dass er in einfacher Weise auswechselbar ist, so dass bei beschädigten Halteelementen 45, 47 diese ohne weiteres ausgetauscht werden können. Selbstverständlich können die Halteelemente 45, 47 der Klipsverbindung 21 auch am Montageträger 33 angeordnet beziehungsweise an diesen angespritzt sein. Denkbar ist auch, dass der Klipsträger 55 mittels der Halteelemente 57, 59 mit dem Montageträger 33 verklipst ist, so dass die Halteelemente 45, 47 in Befestigungsstellung einen Hintergriff zu einem am Kühlmodul 1 angeordneten Gegenelement einnehmen.

In Figur 3A ist der Montageträger 33 mit dem darin lösbar befestigten Kühlmodul 1 in seiner Einbauposition im Kraftfahrzeug dargestellt, wobei die Fahrtrichtung des Fahrzeugs in Richtung der Koordinatenachse x und die Schwerkraftwirkung in oder im Wesentlichen in Richtung der Koordinatenachse z verläuft. Aufgrund dieser Anordnung wird sichergestellt, dass das Gewicht des Kühlmoduls 1 sicher von den Schwenklagern 17, 19 abgestützt beziehungsweise gehalten wird. Die Klipsverbindungen 21, 23 werden daher nicht durch das Gewicht des Kühlmoduls 1 belastet, so dass ein sicheres Halten gewährleistet werden kann.

Die von der Klipsverbindung 21 gebildete Verbindungsstelle 13 ist als Loslager ausgebildet, das heißt, es ermöglicht eine Längenausdehnung des Kühlmoduls 1 in Richtung der Koordinatenachse y, also in Richtung der Schwenkachse des Schwenklagers 19. Hierzu weist das Loch 51 eine so große Breite auf, dass die darin eingreifenden Halteelemente 45, 47 -in Richtung der Einführbewegung gesehen- ein seitliches Spiel aufweisen. In Richtung der Koordinatenachse x ist das Kühlmodul 1 im Bereich der Verbindungsstelle 13 fixiert, wobei die Fixierung in Richtung der Koordinatenachse z durch den Radialbewegungsbegrenzungsanschlag 41 realisiert ist. Da die Gegenfläche 43 am Kühlmodul 1 in ihrem in z-Richtung gesehenen Überdeckungsbereich mit dem Radialbewegungsbegrenzungsanschlag 41 flächig an diesem anliegt, kann die Gegenfläche 43 bei einer Längenänderung des Kühlmoduls 1 am Radialbewegungsbegrenzungsanschlag 41 entlang gleiten. Der Radialbewegungsbegrenzungsanschlag 41 fixiert das Kühlmodul 1 also nur in z-Richtung, während es in x- und in y-Richtung Bewegungen zulässt.

Figur 3B zeigt einen Ausschnitt des Montageträgers 33 und des daran befestigten Kühlmoduls 1 im Bereich des anderen Seitenrandbereiches des Kühlmoduls 1, an dem sich der Lagerzapfen 25 des ersten Schwenklagers 17 befindet (vergleiche Figur 1). Gleiche Teile sind mit gleichen, mit einem Strich ("'") versehenen Bezugszeichen versehen, so dass insofern auf die Beschreibung zu den vorangegangenen Figuren verwiesen wird.

Das auf dem, dem zweiten Schwenklager 19 gegenüberliegenden Seitenrandbereich des Kühlmoduls 1 angeordnete erste Schwenklager 17 weist ebenfalls eine Lagerschale 35' auf, in die der Lagerzapfen 25 eingesetzt ist, wobei der untere gekrümmte Umfangsbereich des Lagerzapfens 25 flächig in dem gekrümmten Wandabschnitt 39' anliegt und von diesem teilweise umgriffen ist und die eine Flachseite des Lagerzapfens 25 größtenteils flächig an dem ersten Wandabschnitt 37' anliegt. Der anhand der Figur 2 beschriebene, von der Außenumfangsfläche 27 des Lagerzapfens 25 hervorstehende Vorsprung 29 greift in Befestigungsstellung des Kühlmoduls 1 in ein Loch 61 im Montageträger 33 formschlüssig ein, wodurch das Kühlmodul 1 im Bereich der Verbindungsstelle 9 sowohl in Richtung der Koordinatenachse x als auch in Richtung der Koordinatenachse y gegen ein Verschieben gesichert ist. Die Form des Lochs 61 ist vorzugsweise an die Außenkontur des Vorsprungs 29 angepasst, das heißt, bei diesem Ausführungsbeispiel weist das Loch 61 also eine in etwa rechteckförmige Form auf. In z-Richtung ist das Kühlmodul 1 auch auf dieser Seite mittels eines Radialbewegungsbegrenzungsanschlages 41' gesichert, an dem die mit dem Kühlmodul 1 verbundene beziehungsweise daran ausgebildete Gegenfläche 43' anliegt.

Die Form und die Größe des Lochs 61 ist also so gewählt, dass die in Richtung der Einführbewegung des Vorsprungs 29 in das Loch 61 gesehene Breite des Lochs 61 in etwa gleich groß, vorzugsweise nur geringfügig größer, als die Breite des Vorsprungs 29 ist. Dasselbe gilt auch für die Höhe des Lochs 61 im Vergleich zu der Höhe des Vorsprungs 29, wie in Figur 3B erkennbar. Eine Verlagerung des Kühlmoduls 1 in z-Richtung wird hier also auch durch den in das Loch 61 eingreifenden Vorsprung 29 verhindert. Bei entsprechender Dimensionierung des Vorsprungs 29 und des Lochs 61 könnte gegebenenfalls auch auf den Radialbewegungsbegrenzungsanschlag 41' verzichtet werden.

Die als Klipsverbindung 23 ausgebildete Verbindungsstelle 15, die sich oberhalb des Schwenklagers 17 befindet, hier in etwa auf der gleichen Höhe wie die Klipsverbindung 21 auf der gegenüberliegenden Seite des Kühlmoduls 1, ist identisch ausgebildet wie die in Figur 3A beschriebene Klipsverbindung 21, so dass auf eine nochmalige Beschreibung verzichtet wird. Auch die anhand der Klipsverbindung 21 beschriebenen Ausführungsvarianten derselben gelten ohne weiteres auch für die Klipsverbindung 23. Neben dem Schwenklager 19 und der Klipsverbindung 21 ist also auch die Klipsverbindung 23 als Loslager ausgebildet. Festlager ist also nur das Schwenklager 17.

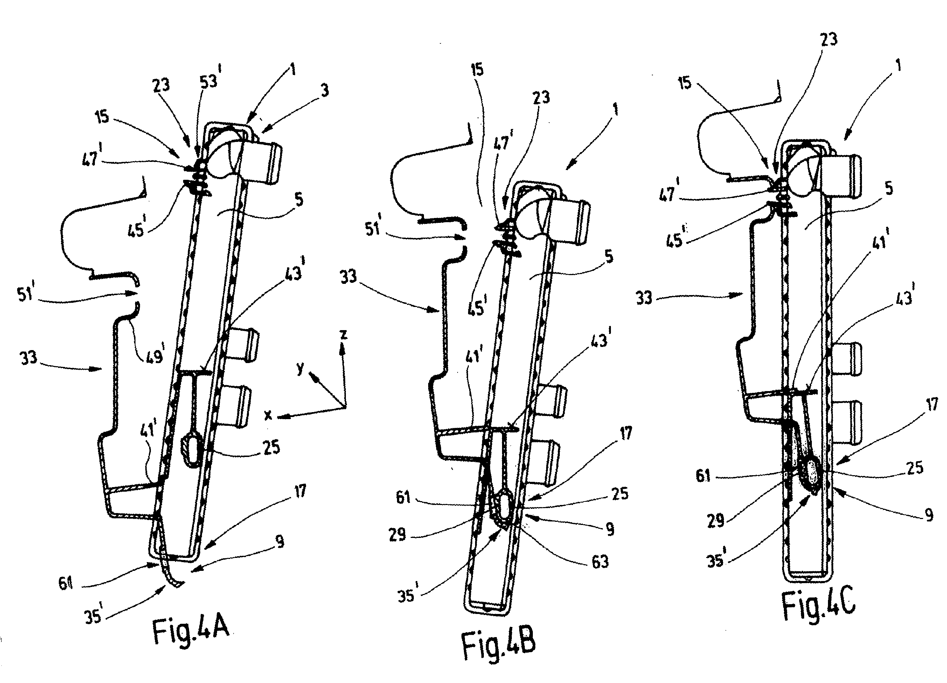

Die Montageschritte zum lösbaren Befestigen des anhand der Figuren 3A und 3B beschriebenen Kühlmoduls 1 am Montageträger 33 erfolgt in der gleichen Weise wie bei dem in den Figuren 4A bis 4C dargestellten Kühlmodul 1, so dass bezüglich der Montage des Kühlmoduls 1 auf die nachfolgende Beschreibung verwiesen wird.

Das in Figur 4 abgebildete Kühlmodul 1 weist insgesamt vier Verbindungsstellen auf, wie sie anhand der Figuren 1 bis 3B beschrieben sind, wobei lediglich die Verbindungsstelle 9 (Schwenklager, Festlager) und die darüber liegende Verbindungsstelle 15 (Klipsverbindung, Loslager) erkennbar sind. Die die Verbindungsstellen 13 und 15 bildenden Klipsverbindungen 21 beziehungsweise 23 unterscheiden sich von den vorstehend beschriebenen Klipsverbindungen lediglich dadurch, dass die Halteelemente 45, 47, 45' und 47' sowie die Auslenkbegrenzungen 53, 53' an das Kühlmodul 1 beziehungsweise den jeweiligen Seitenkasten 7, 5 angespritzt sind.

In Figur 4A ist das Kühlmodul 1 während eines ersten Montageschritts gezeigt, in der es mittels einer translatorischen Einführbewegung von oben in die Schwenklager 17, 19 eingesetzt wird. Es ist zu erkennen, dass das Kühlmodul 1 während der Einführbewegung gegenüber einer gedachten Vertikalen, die parallel zu der Koordinatenachse z verläuft, geneigt ist, wobei der Neigungswinkel vorzugsweise kleiner 45° ist und hier cirka 10° beträgt. In dieser geneigten Stellung wird das Kühlmodul 1 also in die Schwenklager 17, 19 eingeführt.

In Figur 4B ist das Kühlmodul 1 nach Beendigung des ersten Montageschritts dargestellt. Die Lagerzapfen 25, 31 liegen nun in den Lagerschalen 35, 35'. Das gesamte Gewicht des Kühlmoduls 1 wird nun bereits vom Montageträger 33 getragen. Aus Figur 4B ist ersichtlich, dass das Kühlmodul 1 während des ersten Montageschritts insbesondere deshalb gegenüber der Vertikalen geneigt sein muss, dass die Gegenflächen 43 und 43' noch vor dem jeweils zugeordneten Radialbewegungsbegrenzungsanschlag 41 beziehungsweise 41' angeordnet sind und dass darüber hinaus der Vorsprung 29 am Lagerzapfen 25 sich noch vor dem Loch 61 befindet, wie in Figur 4B dargestellt.

Das Kühlmodul 1 wird nun in einem zweiten Montageschritt mittels einer Schwenkbewegung um die Schwenkachse 63 im Wesentlichen in Fahrtrichtung des Fahrzeugs, also in Richtung der Koordinatenachse x in den Schwenklagern 17, 19 in eine Endstellung verschwenkt, in der das Kühlmodul 1 mit dem Montageträger 33 verklipst ist. Diese Endstellung ist in Figur 4C abgebildet. Durch das Verschwenken sind die Gegenflächen 43 und 43' in Gegenüberlage mit den Radialbewegungsbegrenzungsanschlägen 41, 41' gelangt, so dass das Kühlmodul 1 gegen eine Bewegung in vertikaler Richtung, also in Richtung der Koordinatenachse z gesichert ist. Durch das Verschwenken des Kühlmoduls 1 ist auch der Vorsprung 29 am Lagerzapfen 25 in das Loch 61 im Montageträger 33 eingefahren. In den oberen Außenrandbereichen ist das Kühlmodul 1 mittels der Klipsverbindungen 21, 23 gehalten.

Festzuhalten bleibt, dass das Kühlmodul 1 ohne zusätzliche Befestigungsmittel, wie beispielsweise Schrauben, oder Zuhilfenahme von Werkzeugen am Montageträger 33 in nur zwei Montageschritten lösbar befestigbar ist. Dadurch ist eine schnelle Montage des Kühlmoduls 1 am Montageträger 33 möglich.

Das Lösen des am Montageträger 33 befestigten Kühlmoduls 1 erfolgt in umgekehrter Reihenfolge, das heißt, zunächst muss die Verklipsung an den Verbindungsstellen 13 und 15 gelöst und dann das Kühlmodul 1 soweit zurückgeschwenkt werden, dass sich die Gegenflächen 43, 43' nicht mehr in Gegenüberlage mit den Anschlägen 41, 41' befinden und auch der Vorsprung 29 am Lagerzapfen 25 nicht mehr in das Loch 61 eingreift. Dann kann das Kühlmodul 1 aus den Schwenklagern 17, 19 entnommen werden.

Aus den Ausführungen zu den Figuren 4A bis 4C wird ohne weiteres deutlich, dass die Einführbewegung, um das Kühlmodul 1 in die Schwenklager 17, 19 einzusetzen, im Wesentlichen quer zur Fahrtrichtung des Fahrzeugs verläuft, die gemäß dem in Figur 4A gezeigten Koordinatensystem in x-Richtung verläuft. Dadurch, dass die Schwenkbewegung in den Schwenklagern 17, 19 zum Verlagern des Kühlmoduls 1 in seine Endstellung, in Fahrtrichtung des Fahrzeugs erfolgt, kann gewährleistet werden, dass die Klipsverbindungen 21, 23 ausschließlich nur mit positiven Beschleunigungskräften durch das Fahrzeug beaufschlagt werden.

In bevorzugter Ausführungsform ist vorgesehen, dass an allen Verbindungsstellen zwischen Montageträger 33 und Kühlmodul 1 die aneinander anliegenden Teile beziehungsweise Bereiche aus einem, eine gewisse Dämpfungseigenschaft und/oder Elastizität aufweisenden Material bestehen, so dass im Fahrbetrieb möglicherweise auftretende Schwingungen und auf das Kühlmodul einwirkende Kräfte nicht zu einer unerwünschten Geräuschentwicklung führen. Vorzugsweise bestehen die Schwenklager 17, 19, also deren Lagerschalen und Lagerzapfen aus Kunststoff beziehungsweise sind zumindest mit Kunststoff ummantelt. Gleiches gilt für die Klipsverbindungen 21, 23.

Die Anzahl der Verbindungsstellen zwischen Montageträger 33 und Kühlmodul 1 ist nicht auf vier beschränkt. Es können ohne weiteres auch mehr als vier Verbindungsstellen, beispielsweise sechs Verbindungsstellen, oder auch weniger als vier Verbindungsstellen, beispielsweise zwei Verbindungsstellen vorgesehen sein. Bei einer in den Figuren nicht dargestellten vorteilhaften Ausführungsform sind oberhalb der Schwenklager 17, 19 vier, vorzugsweise als Loslager ausgebildete Klipsverbindungen vorgesehen, von denen jeweils zwei an einem Seitenrandbereich des Kühlmoduls 1, vorzugsweise an den Seitenkästen 5, 7, angeordnet sind. Bei entsprechender Anordnung und Ausgestaltung kann es auch ausreichend sein, dass lediglich eine der Verbindungsstellen als Schwenklager ausgebildet ist, wobei die Anordnung des mindestens einen Schwenklagers auch derart gewählt sein kann, dass dessen Schwenkachse nicht in y-Richtung verläuft, wie bei den anhand der vorangegangenen Figuren beschriebenen Ausführungsbeispielen, sondern in Richtung der Koordinatenachse z. Es ist ohne weiteres auch möglich, dass -in vertikaler Richtung gesehen- das mindestens eine Schwenklager oberhalb der wenigstens einen Klipsverbindung angeordnet ist. Allen Ausführungsbeispielen ist jedoch gemeinsam, dass die Einführbewegung im Wesentlichen quer zur Fahrtrichtung des Fahrzeugs verläuft, also in Richtung der Koordinatenachse y oder z, während die Schwenkbewegung im Wesentlichen in Richtung der Koordinatenachse x, also in oder entgegen der Fahrtrichtung des Fahrzeugs verläuft.

Es bleibt festzuhalten, dass die Ausgestaltung der Klipsverbindungen 21, 23 und der Schwenklager 17, 19 auch ohne weiteres derart sein kann, dass beispielsweise die Halteelemente 45, 47 beziehungsweise 45', 47' nicht mit dem Kühlmodul 1 verbunden sind, sondern mit dem Montageträger 33, während das Loch 51 beziehungsweise 51', in das die Halteelemente 45, 47 beziehungsweise 45', 47' eingreifen, demgemäss am Kühlmodul 1 vorgesehen ist. So ist es beispielsweise auch möglich, dass sich am Kühlmodul 1 nicht die Lagerzapfen für die Schwenklager befinden, sondern die Lagerschale, während demgemäss dann die Lagerzapfen am Montageträger 33 angeordnet sind. Das Einsetzen des Kühlmoduls 1 in einem ersten Montageschritt in das jeweilige Schwenklager erfolgt also dann derart, dass die Lagerschalen auf die am Montageträger 33 vorgesehenen Lagerzapfen aufgesetzt werden. Zu diesem Zweck müssen die Lagerschalen nach unten hin geöffnet sein, so dass sie die Lagerzapfen von oben umgreifen. Weitere Ausführungsvarianten sind möglich.

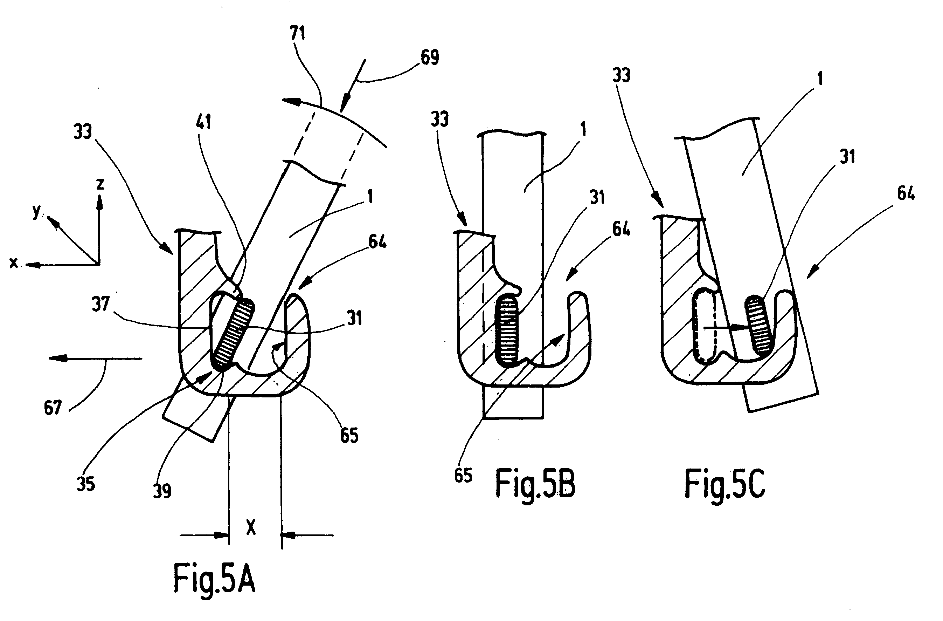

Figur 5A zeigt ein die Erfindung darstellendes Ausführungsbeispiel eines Schwenklagers für ein anhand der Figuren 1 bis 4C beschriebenes oder ähnliches Kühlmodul 1. Das vorstehend beschriebene Schwenklager 19 könnte ohne weiteres auch so ausgebildet sein, wie das Schwenklager 64 aus Figur 5A, dessen Aufbau im Folgenden näher erläutert wird. Das Schwenklager 64 befindet sich ebenfalls in einem Seitenrandbereich des Kühlmoduls 1 und weist eine Lagerschale 35 mit einem vertikal verlaufenden geraden Wandabschnitt 37 und einem sich an dessen Ende anschließenden, an die Außenkontur des Lagerzapfens 31 angepasste Krümmung aufweisenden zweiten Wandabschnitt 39 auf, wobei die Lagerschale 35 an dem Montageträger 33 angespritzt ist. Oberhalb der Lagerschale 35 befindet sich ein am Montageträger 33 angespritzter Radialbewegungsbegrenzungsanschlag 41, der unmittelbar mit dem Lagerzapfen 31 zusammenwirkt. Lagerschale 35 und Radialbewegungsbegrenzungsanschlag 41 sind Bereiche eines entgegen der Fahrtrichtung 67 offenen C-Profils. Das Schwenklager 64 weist ferner einen in einem Abstand X zur Lagerschale 35 (entgegen der Fahrtrichtung 67) angeordneten Wegbegrenzungsanschlag 65 auf, der an die Lagerschale 35 angespritzt ist und auf dessen Funktion noch näher eingegangen wird.

An dem, dem Schwenklager 64 gegenüberliegenden Seitenrandbereich des Kühlmoduls 1 befindet sich ein in den Figuren 5A bis 5C nicht erkennbares Schwenklager, das in gleicher Weise wie das Schwenklager 64 weitergebildet ist. Ebenso wie bei den Schwenklagern 17 und 19 der Figuren 3A und 3B können die Schwenklager 64 der Figuren 5A bis 5C ebenfalls durch geeignete Mittel als Fest- und Loslager ausgebildet sein.

Die Darstellung gemäß Figur 5A zeigt das Kühlmodul 1 in einer Stellung relativ gegenüber dem Montageträger 33, nachdem der erste Montageschritt bereits abgeschlossen ist. Der Lagerzapfen 31 ist also bereits durch eine im Wesentlichen quer zur Fahrtrichtung 67 des Fahrzeugs verlaufende, von oben schräg nach unten erfolgende Einführbewegung, die mit einem Pfeil 69 angedeutet ist, in das Schwenklager 64, das heißt die Lagerschale 35, eingesetzt. Anschließend wird das Kühlmodul 1 in einem zweiten Montageschritt mittels einer mit einem Pfeil 71 angedeuteten Schwenkbewegung im Schwenklager 64 bis in eine in Figur 5B abgebildete Endstellung in Fahrtrichtung 67 verschwenkt. In dieser Endstellung ist das Kühlmodul 1 an seiner mindestens einen, als Klipsverbindung ausgebildeten Verbindungsstelle (nicht dargestellt) mit dem Montageträger 33 verklipst. Damit der Lagerzapfen 31 in eine Gegenüberlage mit dem Radialbewegungsbegrenzungsanschlag 41 gelangen kann, ist der Anschlag 41 und/oder der Lagerzapfen 31 aus einem elastischen Material hergestellt beziehungsweise weist eine elastische Ummantelung auf, so dass beim Verschwenken des Kühlmoduls 1 der Lagerzapfen 31 so weit zusammengedrückt und/oder der Anschlag 41 so weit ausgelenkt werden, dass es zu einem Einrasten des Lagerzapfens 31 in das C-Profil kommt.

Das Schwenklager 64 und das an dem gegenüberliegenden Seitenbereich des Kühlmoduls 1 angeordnete Schwenklager (nicht dargestellt in den Figuren 5A bis 5C) sind so ausgeführt, dass unter den üblichen Betriebsbelastungen die Verbindung zwischen Kühlmodul 1 und Montageträger 33 im Bereich der Schwenklager sicher hält, also die Lagerzapfen 31 in der jeweiligen Lagerschale 35 sicher gehalten werden. Wirken Kräfte auf das Kühlmodul 1, die höher als die betriebsüblichen Kräfte sind, beispielsweise aufgrund eines Frontalzusammenstoßes des Fahrzeugs im "low-speed"-Bereich, also bei geringer Geschwindigkeit, so werden die Lagerzapfen 31 entgegen der Fahrtrichtung 67 aus den Lagerschalen 35 aufgrund von auf die Bauteile wirkenden Verformungskräften und/oder durch Beschleunigungskräfte herausgedrückt. Dabei werden die Lagerzapfen 31 so weit nach rechts (gegen die Fahrtrichtung 67) verschoben, bis sie an dem jeweils zugeordneten Wegbegrenzungsanschlag 65 anschlagen, von diesem also aufgefangen werden, wie in Figur 5C dargestellt. Damit ist für den Fall eines Zusammenstoßes des Fahrzeugs ("Crash") ein definierter Verschiebeweg (Abstand x) des Lagerzapfens 31 gewährleistet.

Da sich die Lagerzapfen 31 aus den Lagerschalen 35 herausdrängen lassen (elastische Aufweitung des C-Profils), weicht das Kühlmodul 1 in seinem unteren Bereich aus, wodurch es sich schräg stellt, wie in Figur 5C abgebildet. Diese Ausweichbewegung des Kühlmoduls 1 vermeidet Beschädigungen des Kühlmoduls 1. Die Schwenklager 64 werden dabei zwar ausgehängt, jedoch nicht die mindestens eine, oberhalb des jeweiligen Schwenklagers 64 angeordnete Klipsverbindung, an der das Kühlmodul 1 nach wie vor am Montageträger 33 fixiert ist.

Bei dem anhand der Figuren 5A bis 5C beschriebenen Montageträger mit dem darin lösbar befestigten Kühlmodul 1 ist gewährleistet, dass alle Kräfte aus der negativen Beschleunigung sicher und ohne Beschädigungen des Montageträgers 33 abgefangen werden.

## Patentansprüche

1. Montageträger (33) eines Frontends eines Kraftfahrzeugs, mit mindestens einem am Montageträger (33) mittels mindestens zweier Verbindungsstellen (9;15;11,13) lösbar befestigten Kühlmodul (1), wobei eine der Verbindungsstellen (9;11) als Schwenklager (17;19;64) und die andere der Verbindungsstellen (13;15) als Klipsverbindung (21;23) ausgebildet ist, **dadurch gekennzeichnet, dass** das Schwenklager (17;19;64) als Rastlager ausgebildet ist, das den Lagerzapfen (31) rastend aufnimmt und bei Beaufschlagung mit einer eine bestimmte Größe überschreitenden, entgegen der Fahrtrichtung (67) wirkenden Kraft durch Ausrasten wieder freigibt, dass sich -entgegen der Fahrtrichtung (67) gesehen- an das Rastlager ein Wegbegrenzungsanschlag (65) mit einem Abstand (x) anschließt, der den äusgerasteten Lagerzapfen (31) in einer Sicherungsposition auffängt, und dass der Wegbegrenzungsanschlag (65) einen im Wesentlichen horizontal verlaufenden, sich an eine Lagerschale (35;35') des Schwenklagers (17;19;64) anschließenden Stützsteg aufweist, an den sich ein im Wesentlichen vertikal verlaufender Anschlagsteg anschließt.

2. Montageträger nach Anspruch 1, **dadurch gekennzeichnet, dass** die Lagerschale (35;35') den Lagerzapfen (25;31) zumindest bereichsweise umgreift.

3. Montageträger nach einem der vorhergehenden Ansprüche, **dadurch gekennzeichnet, dass** die Lagerschale (35;35') eine Einstecköffnung aufweist, über die der Lagerzapfen (25;31) senkrecht oder im Wesentlichen senkrecht zur Schwenkachse (63) in die Lagerschale (35;35') einführbar ist.

4. Montageträger nach einem der vorhergehenden Ansprüche, **dadurch gekennzeichnet, dass** die Klipsverbindung (21;23) mindestens ein -vorzugsweise selbsttätig federnd-auslenkbares Halteelement (45,47;45',47') umfasst, das in Befestigungsstellung einen Hintergriff zu einem Gegenelement (49;49') einnimmt.

5. Montageträger nach einem der vorhergehenden Ansprüche, **dadurch gekennzeichnet, dass** die Verbindungsstellen (9,15;11,13) auf einander gegenüberliegenden Seiten des Kühlmoduls (1) angeordnet sind.

6. Montageträger nach einem der vorhergehenden Ansprüche, **dadurch gekennzeichnet, dass** die eine Verbindungsstelle (9) als Festlager und die andere Verbindungsstelle (15) als Loslager ausgebildet ist.

7. Montageträger nach einem der vorhergehenden Ansprüche, **dadurch gekennzeichnet, dass** das Schwenklager (17;19) und/oder die Klipsverbindung (21;23) in einem Seitenrandbereich des Kühlmoduls (1) angeordnet ist.

8. Montageträger nach einem der vorhergehenden Ansprüche, **dadurch gekennzeichnet, dass** in Richtung der Schwerkraftwirkung gesehen, die Klipsverbindung (21;23) oberhalb des Schwenklagers (17;19) angeordnet ist.

9. Montageträger nach Anspruch 4, **dadurch gekennzeichnet, dass** das Halteelement (45,47;45',47') am Kühlmodul (1) angeordnet ist und in Befestigungsstellung in ein am Montageträger (33) vorgesehenes Loch (51;51') eingreift.

10. Montageträger nach einem der vorhergehenden Ansprüche 4 oder 9, **dadurch gekennzeichnet, dass** das Halteelement (45,47;45',47') an einem Seitenkasten (5;7) des Kühlmoduls (1) angeordnet ist.

11. Montageträger nach einem der vorhergehenden Ansprüche 4, 9 oder 10, **dadurch gekennzeichnet, dass** das Halteelement (45,47;45',47') aus Kunststoff besteht und vorzugsweise in einem Spritzgussverfahren hergestellt ist.

12. Montageträger nach einem der vorhergehenden Ansprüche 4, 9, 10 oder 11, **dadurch gekennzeichnet, dass** das Halteelement (45,47;45',47') einstückig mit dem Kühlmodul (1), insbesondere mit dem mindestens einen Seitenkasten (5;7), verbunden ist.

13. Montageträger nach einem der vorhergehenden Ansprüche 4, 9, 10, 11 oder 12, **dadurch gekennzeichnet, dass** die Klipsverbindung (21;23) eine Auslenkbegrenzung (53;53') für das auslenkbare Halteelement (45,47;45',47') aufweist.

14. Montageträger nach einem der vorhergehenden Ansprüche, **dadurch gekennzeichnet, dass** der Montageträger (33) in Hybridbauweise hergestellt ist und einen kunststoffumspritzten Metallkern aufweist.

15. Montageträger nach einem der vorhergehenden Ansprüche, **dadurch gekennzeichnet, dass** wenigstens vier Verbindungsstellen (9,11,13,15) vorgesehen sind, und dass wenigstens eine der Verbindungsstellen (9) als Festlager und die anderen Verbindungsstellen (11,13,15) als Loslager ausgebildet sind, wobei das mindestens eine Festlager als Schwenklager (17) und zumindest ein Teil der Loslager jeweils als Klipsverbindung (21,23) ausgebildet sind.

16. Montageträger nach Anspruch 15, **dadurch gekennzeichnet, dass** ein als Loslager ausgebildetes zweites Schwenklager (19) vorgesehen ist, das auf der dem ersten Schwenklager (17) gegenüberliegenden Seite des Kühlmoduls (1) angeordnet ist.

17. Montageträger nach einem der vorhergehenden Ansprüche 15 und 16, **dadurch gekennzeichnet, dass** oberhalb der Schwenklager (17,19) jeweils mindestens eine Klipsverbindung (21,23) auf der jeweils gleichen Seite des Kühlmoduls (1) wie das zugeordnete Schwenklager (17,19) angeordnet sind.

18. Montageträger nach einem der vorhergehenden Ansprüche, **gekennzeichnet durch** einen Radialbewegungsbegrenzungsanschlag (41,41'), der das in eine Endstellung verschwenkte Kühlmodul (1) gegen eine Bewegung senkrecht oder in senkrechter Richtung zur Fahrtrichtung des Kraftfahrzeugs sichert.

19. Montageträger nach einem der vorhergehenden Ansprüche, **dadurch gekennzeichnet, dass** das Kühlmodul (1) schraubenfrei am Montageträger (33) befestigt ist.

## Claims

1. Assembly support (33) of a front end of a motor vehicle, having at least one cooling module (1) which is detachably fixed to the assembly support (33) by means of at least two connecting points (9;15;11,13), wherein one of the connecting points (9;11) is designed as a pivot bearing (17;19;64), and the other of the connecting points (13;15) is designed as a clip connection (21;23) **characterized in that** the pivot bearing (17;19;64) is designed as a latching bearing which accommodates the bearing pin (31) in a latching fashion and releases it again by disengaging when a force which exceeds a specific value and which acts counter to the direction (67) of travel is applied, **in that** - viewed in the direction opposite to the direction (67) of travel - a travel limiter stop (65) adjoins the latching bearing at a distance (x) which the disengaged bearing pin (31) catches in a securing position, and **in that** the travel limiter stop (65) has a supporting web which extends essentially horizontally and adjoins the bearing shell (35; 35') of the pivot bearing (17;19;64) and is adjoined by an essentially vertically extending stop web.

2. Assembly support according to claim 1, **characterized in that** the bearing shell (35;35') engages around the bearing pin (25;31) at least partially.

3. Assembly support according to one of the preceding claims, **characterized in that** the bearing shell (35;35') has a plug-in opening via which the bearing pin (25;31) can be introduced into the bearing shell (35;35') perpendicularly, or essentially perpendicularly, with respect to the pivot axis (63).

4. Assembly support according to one of the preceding claims, **characterized in that** the clip connection (21;23) comprises at least one deflectable securing element (45,47;45',47') which can preferably be deflected automatically in a resilient fashion, and which, in the attachment position, assumes a position in which it engages behind a corresponding element (49;49').

5. Assembly support according to one of the preceding claims, **characterized in that** the connecting points (9,15;11,13) are arranged on opposite sides of the cooling module (1).

6. Assembly support according to one of the preceding claims, **characterized in that** the one connecting point (9) is designed as a fixed bearing, and the other connecting point (15) is designed as a movable bearing.

7. Assembly support according to one of the preceding claims, **characterized in that** the pivot bearing (17;19) and/or the clip connection (21;23) are arranged in a side edge region of the cooling module (1).

8. Assembly support according to one of the preceding claims, **characterized in that**, viewed in the direction of the action of gravity, the clip connection (21;23) is arranged above the pivot bearing (17;19).

9. Assembly support according to claim 4, **characterized in that** the securing element (45,47;45',47') is arranged on the cooling module (1) and, in the attachment position, engages in a hole (51;51') which is provided on the assembly support (33).

10. Assembly support according to one of the preceding claims 4 or 9, **characterized in that** the securing element (45,47;45',47') is arranged on a side box (5;7) of the cooling module (1).

11. Assembly support according to one of the preceding claims 4, 9 or 10, **characterized in that** the securing element (45,47;45',47') is composed of plastic and is manufactured preferably using an injection molding method.

12. Assembly support according to one of the preceding claims 4, 9, 10 or 11, **characterized in that** the securing element (45,47;45',47') is integrally connected to the cooling module (1), in particular to the at least one side box (5;7).

13. Assembly support according to one of the preceding claims 4, 9, 10, 11 or 12, **characterized in that** the clip connection (21;23) has a deflection limiter (53;53') for the deflectable securing element (45,47;45', 47').

14. Assembly support according to one of the preceding claims, **characterized in that** the assembly support (33) is manufactured in a hybrid design and has a metal core which is encapsulated by injection molding with plastic.

15. Assembly support according to one of the preceding claims, **characterized in that** at least four connecting points (9,11,13,15) are provided, and **in that** at least one of the connecting points (9) is designed as a fixed bearing, and the other connecting points (11,13,15) are designed as movable bearings, the at least one fixed bearing being designed as a pivot bearing (17) and at least some of the movable bearings being designed respectively as clip connections (21,23).

16. Assembly support according to claim 15, **characterized in that** a second pivot bearing (19) is provided which is designed as a movable bearing and which is arranged on that side of the cooling module (1) which is opposite the first pivot bearing (17).

17. Assembly support according to one of the preceding claims 15 and 16, **characterized in that** in each case at least one clip connection (21,23) is arranged above the pivot bearings (17,19), on the respective same side of the cooling module (1) as the assigned pivot bearing (17,19).

18. Assembly support according to one of the preceding claims, **characterized by** a radial movement limiter stop (41,41') which secures the cooling module (1), which has been pivoted into an end position, against movement perpendicularly or in the perpendicular direction with respect to the direction of travel of the motor vehicle.

19. Assembly support according to one of the preceding claims, **characterized in that** the cooling module (1) is attached to the assembly support (33) without screws.

## Revendications

1. Support de montage (33) d'une partie avant d'un véhicule automobile, présentant au moins un module de refroidissement (1) fixé de manière amovible sur le support de montage (33) par l'intermédiaire d'au moins deux points de jonction (9; 15; 11, 13), l'un des points de jonction (9 ; 11) étant conçu sous forme de palier pivotant (17; 19 ; 64) et l'autre des points de jonction (13 ; 15) sous forme de système de liaison encliquetable (21 ; 23), **caractérisé en ce que** le palier pivotant (17 ; 19 ; 64) est conçu sous forme de palier d'arrêt qui loge par encliquetage le tourillon (31) et le libère à nouveau par dégagement lorsqu'une force agissant dans le sens inverse de la marche (67) et dépassant une certaine intensité est appliquée, que, vu dans le sens inverse de la marche (67), une butée de limitation de course (65) se rattache avec un écart (x) au palier d'arrêt, laquelle butée maintient le tourillon (31) dégagé dans une position de sûreté, et que la butée de limitation de course (65) présente une entretoise d'appui s'étendant essentiellement à l'horizontale et se rattachant à une coquille de coussinet (35 ; 35') du palier pivotant (17 ; 19 ; 64), à laquelle entretoise se rattache une entretoise de butée s'étendant essentiellement à la verticale.

2. Support de montage selon la revendication 1, **caractérisé en ce que** la coquille de coussinet (35 ; 35') entoure au moins en partie le tourillon (25 ; 31).

3. Support de montage selon une des revendications précédentes, **caractérisé en ce que** la coquille de coussinet (35 ; 35') présente une ouverture d'insertion par l'intermédiaire de laquelle le tourillon (25 ; 31) peut être introduit dans la coquille de coussinet (35 ; 35') en position verticale ou essentiellement verticale par rapport à l'axe de pivotement (63).

4. Support de montage selon une des revendications précédentes, **caractérisé en ce que** le système de liaison encliquetable (21 ; 23) comprend au moins un élément de maintien (45, 47 ; 45', 47') pouvant être dévié, de préférence de manière élastique et automatique, lequel élément saisit, en position de fixation, un contre-élément (49 ; 49') par l'arrière.

5. Support de montage selon une des revendications précédentes, **caractérisé en ce que** les points de jonction (9, 15 ; 11, 13) sont disposés respectivement sur des côtés opposés du module de refroidissement (1).

6. Support de montage selon une des revendications précédentes, **caractérisé en ce qu'**un des points de jonction (9) est conçu sous forme de palier fixe et l'autre point de jonction (15) sous forme de palier libre.

7. Support de montage selon une des revendications précédentes, **caractérisé en ce que** le palier pivotant (17 ; 19) et/ou le système de liaison encliquetable (21 ; 23) est (sont) disposé(s) dans une zone de bord latérale du module de refroidissement (1).

8. Support de montage selon une des revendications précédentes, **caractérisé en ce que**, vu dans le sens de l'action de la gravité, le système de liaison encliquetable (21 ; 23) est situé au-dessus du palier pivotant (17 ; 19).

9. Support de montage selon la revendication 4, **caractérisé en ce que** l'élément de maintien (45, 47 ; 45', 47') est disposé sur le module de refroidissement (1) et s'engage, en position de fixation, dans un orifice (51 ; 51') prévu sur le support de montage (33).

10. Support de montage selon une des revendications précédentes 4 ou 9, **caractérisé en ce que** l'élément de maintien (45, 47 ; 45', 47') est disposé sur un boîtier latéral (5 ; 7) du module de refroidissement (1).

11. Support de montage selon une des revendications précédentes 4, 9 ou 10, **caractérisé en ce que** l'élément de maintien (45, 47 ; 45', 47') se compose de plastique et est fabriqué de préférence selon un procédé de moulage par injection.

12. Support de montage selon une des revendications précédentes 4, 9, 10 ou 11, **caractérisé en ce que** l'élément de maintien (45, 47 ; 45', 47') est relié au module de refroidissement (1), en particulier à l'au moins un boîtier latéral (5 ; 7), pour ne former qu'une seule pièce.

13. Support de montage selon une des revendications précédentes 4, 9, 10, 11 ou 12, **caractérisé en ce que** le système de liaison encliquetable (21 ; 23) présente un limiteur de déviation (53 ; 53') pour l'élément de maintien (45, 47 ; 45', 47') pouvant être dévié.

14. Support de montage selon une des revendications précédentes, **caractérisé en ce que** le support de montage (33) est de construction hybride et présente un noyau métallique enrobé de plastique.

15. Support de montage selon une des revendications précédentes, **caractérisé en ce que** sont prévus au moins quatre points de jonction (9, 11, 13, 15), et qu'au moins un des points de jonction (9) est conçu sous forme de palier fixe et les autres points de jonction (11, 13, 15) sous forme de palier libre, sachant que l'au moins un palier fixe est conçu sous forme de palier pivotant (17) et au moins une partie de chacun des paliers libres sous forme de système de liaison encliquetable (21, 23).

16. Support de montage selon la revendication 15, **caractérisé en ce qu'**est prévu un second palier pivotant (19) conçu sous forme de palier libre qui est disposé sur le côté du module de refroidissement (1) opposé au premier palier pivotant (17).

17. Support de montage selon une des revendications précédentes 15 et 16, **caractérisé en ce que**, au-dessus des paliers pivotants (17, 19), est disposé à chaque fois au moins un système de liaison encliquetable (21, 23) sur respectivement le même côté du module de refroidissement (1) que le palier pivotant (17, 19) associé.

18. Support de montage selon une des revendications précédentes, **caractérisé par** une butée (41, 41') limitant le mouvement radial qui empêche le module de refroidissement (1) pivoté en position finale de bouger verticalement ou dans le sens vertical par rapport au sens de la marche du véhicule automobile.

19. Support de montage selon une des revendications précédentes, **caractérisé en ce que** le module de refroidissement (1) est fixé sans vis au support de montage (33).
